Europäisches Patentamt

European Patent Office

Office européen des brevets

(19)

(11) Numéro de publication : **0 341 101 B1**

(12) **FASCICULE DE BREVET EUROPEEN**

(45) Date de publication du fascicule du brevet :
02.01.92 Bulletin 92/01

(51) Int. Cl.⁵ : **B60T 13/52**

(21) Numéro de dépôt : 89400913.3

(22) Date de dépôt : **04.04.89**

(54) Servomoteur d'assistance au freinage.

(30) Priorité : 28.04.88 FR 8805657

(43) Date de publication de la demande :
08.11.89 Bulletin 89/45

(45) Mention de la délivrance du brevet :
02.01.92 Bulletin 92/01

(84) Etats contractants désignés :
DE ES FR GB IT

(56) Documents cités :
FR-A- 1 560 915
GB-A- 2 104 989
US-A- 4 671 167

(73) Titulaire : **BENDIX EUROPE Services
Techniques S.A.
126 rue de Stalingrad
F-93700 Drancy (FR)**

(72) Inventeur : **Gautier, Jean-Pierre
BENDIX FRANCE S.A. 126 Rue de Stalingrad
F-93700 Drancy (FR)**

(74) Mandataire : **Lejet, Christian
Bendix Europe Service Techniques Service
Brevets 126 rue de Stalingrad
F-93700 Drancy (FR)**

## Description

L'invention concerne un servomoteur d'assistance au freinage et s'applique avantageusement aux véhicules automobiles.

Un servomoteur d'assistance au freinage de conception classique, par exemple celui décrit dans le document FR-A-2442984 comprend une enveloppe et une membrane qui divise de manière étanche l'intérieur de l'enveloppe en une chambre avant et une chambre arrière, un piston creux mobile dans l'enveloppe, un organe d'entrée destiné à être relié à une pédale de frein, un ensemble de sortie destiné à être relié à un piston d'un maître-cylindre, un disque de réaction en un matériau déformable et disposé entre le piston creux et l'ensemble de sortie afin de recevoir la force de sortie du servomoteur lors de sa mise en oeuvre, la force de sortie provoquant une première déformation du disque de réaction, déformation qui tend à repousser l'organe d'entrée.

Avec un tel servomoteur, lors d'un freinage important il arrive un moment où le moyen de valve qui contrôle le passage d'air vers la chambre arrière est complètement ouvert. La pression dans la chambre arrière devient égale à celle de l'air atmosphérique et il n'y a, donc, plus d'assistance fournie par le servomoteur. Si le freinage continue au-delà de ce point, appelé point de saturation, l'augmentation de l'effort d'entrée est sensiblement égale à l'augmentation de l'effort de sortie du sermomoteur. Certains constructeurs d'automobiles souhaitent que le passage de la phase assistée du servomoteur à la phase non-assistée, c'est-à-dire, le passage du point de saturation, soit plus progressif.

La présente invention a donc pour but de réaliser un servomoteur d'assistance au freinage dans lequel le passage du point de saturation est plus progressif.

US-A-4671167 décrit un servomoteur d'assistance au freinage permettant de modifier la force de réaction en fonction de la force de sortie du dispositif. Dans ce servomoteur, l'ensemble de sortie est formé en deux parties distinctes. Un mécanisme de rotation de l'arbre de sortie est prévu pour modifier la force de réaction.

Selon la présente invention, les deux parties de l'ensemble de sortie sont déplaçables l'une par rapport à l'autre à l'encontre d'un moyen de ressort afin d'agir sur une surface réduite du disque de réaction.

Un mode de realisation de la présente invention sera maintenant décrit, à titre d'exemple nullement limitatif, en se référant au dessin annexé sur lequel :
— la figure 1 est une vue en coupe longitudinale d'une partie d'un servomoteur d'assistance au freinage réalisé conformément à l'invention ;
— la figure 2 est une vue analogue à celle de la figure 1 et montre le servomoteur dans une position de fonctionnement ; et
— la figure 3 donne une courbe du servomoteur selon l'invention, la force d'entrée étant indiquée en abscisse et la force de sortie en ordonnée.

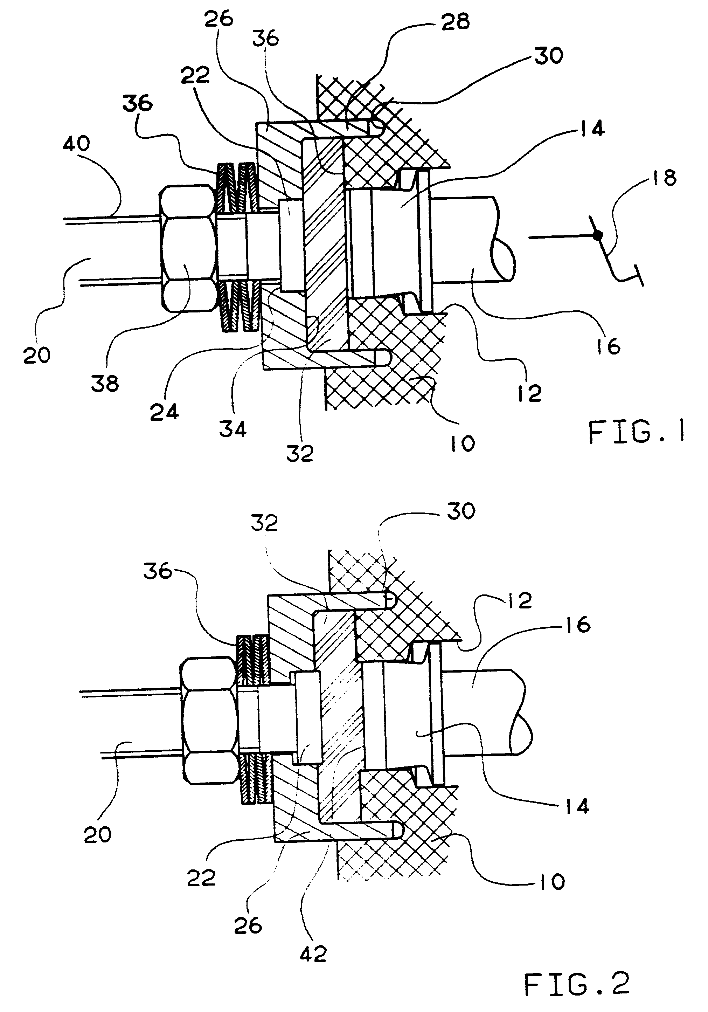

La figure 1 représente la partie centrale d'un servomoteur d'assistance au freinage prévu pour être placé de façon habituelle entre la pédale de frein d'un véhicule et le maître-cylindre commandant le circuit de freinage hydraulique. Par convention, on appelle avant du servomoteur la partie de ce dernier tournée vers le maître-cylindre, et arrière du servomoteur la partie tournée vers la pédale de frein.

La partie du servomoteur représentée figure 1 comprend un piston creux 10 destiné à être monté mobile axialement à l'intérieur de l'enveloppe du servomoteur à recevoir un bord périphérique intérieur d'une membrane souple divisant l'intérieur de l'enveloppe en une chambre avant et une chambre arrière (non-représentés). Le piston creux 10 comporte un alésage axial étagé 12 dans lequel est monté à coulissement un plongeur 14 destiné à être relié par une tige d'entrée 16 à la pédale de frein 18. Le plongeur 14 et la tige d'entrée 16 forment ensemble un organe d'entrée.

Le servomoteur comprend, de plus, une tige de sortie 20 dont une extrémité est destinée à être reçue dans une ouverture pratiqué dans un piston d'un maître-cylindre (non-représenté). L'autre extrémité de la tige de sortie 20 comprend une tête élargie 22 qui est reçue dans une ouverture étagée 24 ménagée dans un couvercle 26, le tout formant un ensemble de sortie. Le couvercle 26 est sensiblement en forme de coupe et comprend un bord annulaire 28 qui est reçu dans une gorge annulaire 30 formée dans le piston creux 10 autour de l'alésage étagé 12. A l'intérieur du couvercle 26 est disposé un disque de réaction 32 en un matériau déformable tel que du caoutchouc. Le disque 32 vient en aboutement contre la surface intérieure 34 du couvercle et contre la surface avant 36 du piston creux 10.

La tête élargie 22 de la tige de sortie 20 est retenue pressée contre la butée de l'ouverture étagée 24 par une une série de rondelles Belleville 36, quatre dans l'exemple illustré, qui sont disposées autour de la tige de sortie entre le couvercle 26 et un écrou de butée 38 monté fixe sur la tige de sortie 20. L'écrou 38 est monté sur une partie filetée 40 de la tige de sortie 20 afin de permettre le réglage de la compression des rondelles Belleville 36.

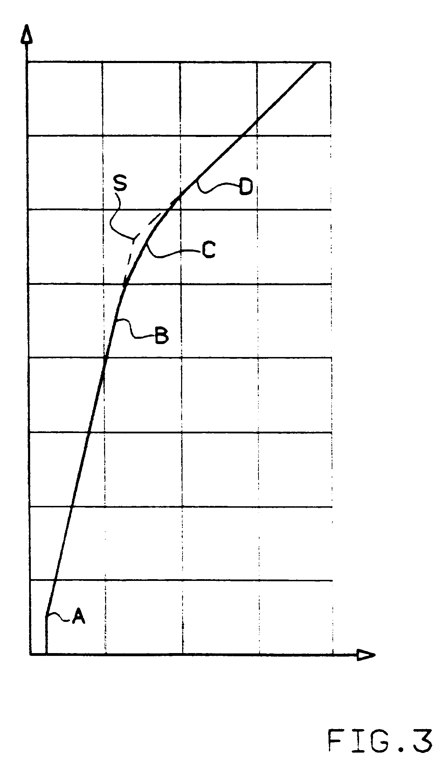

Le servomoteur ainsi décrit fonctionne de la façon suivante : lorsque le conducteur appuie sur la pédale de frein 18, la tige d'entrée 16 se déplace vers l'avant et un moyen de valve classique (non-représenté) isole la chambre arrière d'une source de vide et la met en communication avec l'air atmosphérique. La différence de pression ainsi créée entre la chambre arrière et la chambre avant agit sur le piston creux 10 et sur la membrane flexible et les pousse vers l'avant. Le piston creux 10 provoque le déplacement du couvercle 26 et de la tige de sortie 20 par l'intermédiaire du disque de réaction 32. Quand l'effort appliqué sur le disque de réaction 32 commence à augmenter, le disque est comprimé entre la surface avant du piston creux 10 et la surface intérieure 34 du couvercle 26, le bord annulaire 28 pénétrant dans la gorge annulaire 30. Le disque de réaction 32 est donc comprimé et progressivement déformé, créant une projection qui fait saillie dans l'alésage étagé 12 vers le plongeur 14. Au delà d'un certain seuil, représenté par le point A sur la courbe de la figure 3, le disque de réaction 32 se déforme, de façon connu en soi, et présente une protubérance qui vient en appui sur la surface avant du plongeur 14 vers l'arrière. Cette condition est représentée par le point A sur la courbe de la figure 3, une première force de réaction sur la pédale de frein 18 est ainsi créée.

Si le freinage continue l'effort sur la tige de sortie 20 va continuer à croître. Au delà d'un deuxième seuil, représenté par le point B sur la courbe de la figure 3, les rondelles Belleville 36 commencent à s'écraser, permettant un mouvement relatif entre la tige de sortie 20 et le couvercle 26. Comme représenté sur la figure 2, la tête élargie 22 de la tige de sortie 20 s'enfonce progressivement dans le disque de réaction 32 provoquant, par la déformation du disque, un deuxième accroissement de la protubérance de matériau 42 qui fait saillie dans l'alésage 12 et tend à repousser davantage le plongeur 14. Une deuxième force de réaction sur la pédale de frein 18 est ainsi ajoutée à la première créée. Cette condition est représentée par le point C sur la courbe de la figure 3.

Ainsi, conformément à l'invention, le fait d'avoir l'ensemble de sortie 20, 26 formé en deux parties, l'une déplaçable par rapport à l'autre à l'encontre d'un moyen de ressort permet d'améliorer les caractéristiques du servomoteur, notamment celle de la réaction pédale.

On peut envisager de varier la section de la tête élargie 22 qui est appliquée sur le disque de réaction en vue de modifier la déformation du disque de réaction. Cependant il est préférable que la surface de la tête élargie soit sensiblement inférieure à celle du plongeur 14. De plus on peut envisager que le moyen de ressort puisse être autre qu'une série de rondelles Belleville, par exemple un ressort helicoïdal.

Ainsi, si l'on considère la courbe pour un servomoteur classique, telle que représentée sur la figure 3 en pointillé, on constatera qu'il y a une coupure nette S au moment du passage à la saturation. En revanche, grâce à la présente invention le passage entre le freinage assisté et la saturation est progressif comme représenté par la section BCD de la courbe de la figure 3.

**Revendications**

1. Servomoteur d'assistance au freinage du type qui comprend une enveloppe et une membrane qui divise de manière étanche l'intérieur de l'enveloppe en une chambre avant et une chambre arrière, un piston creux (10) mobile dans l'enveloppe, un organe d'entrée (14, 16) destiné à être relié à une pédale de frein (18), un ensemble de sortie (20, 26) destiné à être relié à un piston d'un maître-cylindre, un disque de réaction (32) en un matériau déformable et disposé entre le piston creux (10) et l'ensemble de sortie (20, 26) afin de recevoir la force de sortie du servomoteur lors de sa mise en oeuvre, la force de sortie provoquant une première déformation du disque de réaction (32) déformation qui tend à repousser l'organe d'entrée (14, 16), l'ensemble de sortie (20, 26) étant formé en deux parties, caractérisé en ce que les deux parties de l'ensemble de sortie (20, 26) sont déplaçables l'une par rapport à l'autre à l'encontre d'un moyen de ressort (36) afin d'agir sur une surface réduite du disque de réaction (32).

2. Servomoteur selon la revendication 1 caractérisé en ce que l'une desdites deux parties est montée à coulissement à l'intérieur de l'autre.

3. Servomoteur selon la revendication 1 ou 2 caractérisé en ce que l'une (26) des dites deux parties est sensiblement en forme de coupe, le disque de réaction (32) étant disposé à l'intérieur de la coupe (26), l'autre partie étant en forme de tige (20) passant à travers une ouverture (24) dans la coupe (26).

4. Servomoteur selon la revendication 3 caractérisé en ce que l'ouverture (24) est étagée, la tige (20) comportant une tête élargie (22) qui est reçue dans l'ouverture étagée (24) et est destinée a prendre appui sur le disque de réaction (32).

5. Servomoteur selon la revendication 3 ou 4 caractérisé en ce que le moyen de ressort comprend des rondelles Belleville (36) disposées autour de la tige (20) entre la coupe (26) et une butée (38) sur la tige (20).

6. Servomoteur selon l'une des revendications 1 à 5 caractérisé en ce qu'il comprend, en plus, des moyens (38, 40) pour régler la force du moyen de ressort (36).

7. Servomoteur selon l'une des revendications 4 à 6 caractérisé en ce que la surface de la tête élargie (22) présentée au disque de réaction (32) est sensiblement inférieure à celle de l'organe d'entrée (14, 16).

**Patentansprüche**

1. Bremsunterstützungs-Servomotor eines Typs mit einem Gehäuse und einer Membran, die das Gehäuseinnere auf dichte Weise in eine vordere Kammer und eine hintere Kammer unterteilt, einem im Gehäuse beweglichen Hohlkolben (10), einem Eingangselement (14, 16), das dazu bestimmt ist, mit einem Bremspedal (18) verbunden zu werden, einer Ausgangseinheit (20, 26), die dazu bestimmt ist, mit einem Kolben eines Hauptzylinders verbunden zu werden, und einer Gegendruckscheibe (32) aus einem verformbaren Material, die zwischen dem Hohlkolben (10) und der Ausgangseinheit (20, 26) angeordnet ist, um die Ausgangskraft des Servomotors aufzunehmen, wenn dieser betätigt wird, wobei die Ausgangskraft eine erste Verformung der Gegendruckscheibe (32) hervorruft, die bestrebt ist, das Eingangselement (14, 16) zurückzudrücken, wobei die Ausgangseinheit (20, 26) aus zwei Teilen gebildet ist, dadurch gekennzeichnet, daß die zwei Teile der Ausgangseinheit (20, 26) relativ zueinander gegen ein Federmittel (36) verschiebbar sind, um auf eine verkleinerte Fläche der Gegendruckscheibe (32) einzuwirken.

2. Servomotor gemäß Anspruch 1, dadurch gekennzeichnet, daß einer der zwei Teile gleitend im Inneren des anderen angebracht ist.

3. Servomotor gemäß Anspruch 1 oder 2, dadurch gekennzeichnet, daß einer (26) der zwei Teile im wesentlichen becherförmig ist, wobei die Gegendruckscheibe (32) im Inneren des Bechers (26) angeordnet ist, während der andere Teil stiftförmig (20) ist und durch eine Öffnung (24) im Becher (26) verläuft.

4. Servomotor gemäß Anspruch 3, dadurch gekennzeichnet, daß die Öffnung (24) gestuft ist, wobei der Stift (20) einen vergrößerten Kopf (22) aufweist, der von der gestuften Öffnung (24) aufgenommen wird und dazu bestimmt ist, an der Gegendruckscheibe (32) aufzuliegen.

5. Servomotor gemäß Anspruch 3 oder 4, dadurch gekennzeichnet, daß das Federmittel Belleville-Dichtungsringe (36) umfaßt, die um den Stift (20) zwischen dem Becher (26) und einem Anschlag (38) am Stift (20) angeordnet sind.

6. Servomotor gemäß einem der Ansprüche 1 bis 5, dadurch gekennzeichnet, daß er außerdem Mittel (38, 40) zum Einstellen der Kraft des Federmittels (36) umfaßt.

7. Servomotor gemäß einem der Ansprüche 4 bis 6, dadurch gekennzeichnet, daß die Oberfläche des vergrößerten Kopfes (22), der an der Gegendruckscheibe (32) vorhanden ist, im wesentlichen kleiner als diejenige des Eingangselementes (14, 16) ist.

**Claims**

1. Brake booster of the type comprising a casing and a diaphragm which divides the interior of the casing sealingly into a front chamber and a rear chamber, a hollow piston (10) movable in the casing, an input member (14, 16) intended to be connected to a brake pedal (18), an output assembly (20, 26) intended to be connected to a piston of a master cylinder, a reaction disk (32) made of a deformable material and arranged between the hollow piston (10) and the output assembly (20, 26), in order to receive the output force of the booster when it is put into operation, the output force causing a first deformation of the reaction disk (32), this deformation tending to push back the input member (14, 16), the output assembly (20, 26) being formed from two parts, characterized in that the two parts of the output assembly (20, 26) are movable relative to each other counter to a spring means (36), in order to act on a reduced surface of the reaction disk (32).

2. Booster according to Claim 1, characterized in that one of the said two parts is mounted slideably inside the other.

3. Booster according to Claim 1 or 2, characterized in that one (26) of the said two parts is substantially cup-shaped, the reaction disk (32) being arranged inside the cup (36), the other part being in the form of a rod (20) passing through an orifice (24) in the cup (26).

4. Booster according to Claim 3, characterized in that the orifice (24) is stepped, the rod (20) having a widened head (22) which is received in the stepped orifice (24) and which is intended to bear on the reaction disk (32).

5. Booster according to Claim 3 or 4, characterized in that the spring means comprises Belleville washers (36) arranged round the rod (20) between the cup (26) and an abutment (38) on the rod (20).

6. Booster according to one of Claims 1 to 5, characterized in that it also possesses means (38, 40) for adjusting the force of the spring means (36).

7. Booster according to one of Claims 4 to 6, characterized in that the surface of the widened head (22) presented to the reaction disk (32) is substantially less than that of the input member (14, 16).

FIG.1

FIG.2

5

FIG.3